# EUROPEAN PATENT SPECIFICATION

(11) **EP 2 698 251 B1**
(45) Date of publication and mention of the grant of the patent: **01.03.2017**
(21) Application number: 12180313.4
(22) Date of filing: 13.08.2012
(51) Int. Cl.: B32B 27/32, C08J 5/18

(54) **Films**
Folien
Films

(43) Date of publication of application: 19.02.2014
(73) Proprietor: Borealis AG, 1220 Vienna (AT)
(72) Inventor: Niedersuess, Peter, 4312 Ried/Riedmark (AT)
(74) Representative: Campbell, Neil Boyd

(56) References cited:
- EP-A1- 1 941 998
- EP-A1- 1 941 999

## Description

This invention relates to films with excellent mechanical properties and low sealing initiation temperatures that comprise a blend of a multimodal linear low density polyethylene and a plastomer that has been formed into a film and uniaxially stretched in the machine direction (MDO films). In particular, the invention relates to the formation of multilayer MDO films in which the sealing layer comprises the blend. The invention also provides a process for forming these machine direction oriented films and articles packaged using the films.

### Background of the Invention

The use of machine directional oriented (MDO) films made from polyethylene is well known. These films are generally produced to down gauge existing blown film recipes. This means less polymer film is required to achieve a target end use.

Linear low density polyethylenes (LLDPEs) such as Borlite OPE grades from Borealis enable down gauging as they give extremely high mechanical strength after the MDO step.

A common application of these MDO films is in packaging, in particular using form fill and seal (FFS) packaging lines familiar in the art. In order to allow sealing in an FFS line, it is necessary to use special sealing bars due to the high seal initiation temperature and very narrow sealing window of MDO films. This is problematic as MDO films have a tendency to shrink when exposed to high temperatures. The avoidance therefore of high temperature sealing processes would be advantageous.

In the context of unstretched film, it is known that single site LLDPE grades with densities below 920 kg/m³ provide very good sealing and are therefore used as either materials in a sealing layer or as modifiers for improved sealing behaviour in a layer of a film.

However, the MD stretching of the polymer increases the crystallinity of the material and that results in poorer sealing performance as described above. The simple use of polymers found to have good sealing in unstretched film does not address the more subtle problems faced in the MDO film area.

Thus, for example, when using a single site LLDPE of low density in an MDO film, the sealing initiation temperature is not lowered.

The present inventors therefore sought a solution to the problem of reducing seal initiation temperature without compromising other properties of the film, in particular the mechanical properties of the film. The inventors have found that by using a combination of a multimodal LLDPE with a low density plastomer in the sealing layer of a film, the seal initiation temperature can be reduced without significantly compromising the mechanical properties of the film.

The use of LLDPE materials in MDO films and even as a component of a blend in the sealing layer of an MDO film is not new. In EP-A-1941998 an MDO film is described in which the outer layer is formed from a blend of Ziegler Natta multimodal LLDPE and a metallocene produced LLDPE. The films described are multilayer films.

In EP-A-1941999, the outer layer of the MDO films described also contains a blend of in an MDO film comprises a blend of Ziegler Natta multimodal LLDPE and a metallocene produced LLDPE. The films are again multilayer and comprise a (C) layer formed from an acrylate.

In WO03/064519, MDO films are described which are formed by blending a medium density polyethylene (MDPE) with an LLDPE to improve modulus, gloss, haze, tear and impact properties. The exemplified films are monolayer films.

The present inventors have surprisingly found that a multimodal LLDPE can be modified with a low density plastomer with density 900 kg/m³ or less to achieve a reduction in the seal initiation temperature. This also results in a broadening of the sealing window, i.e. the temperature over which a useful seal can be formed during a sealing operation. Moreover, this reduction in seal initiation temperature and broadening of sealing window is achieved without significant loss in mechanical in mechanical performance, in particular in terms of dart drop (impact strength), tear resistance and stiffness.

### Summary of Invention

Viewed from one aspect the invention provides a monolayer machine direction oriented film comprising a blend of a multimodal linear low density polyethylene (LLDPE) and a plastomer having a density of 900 kg/m³ or less, said film being a stretched film which is uniaxially oriented in the machine direction (MD) in a draw ratio of at least 1:3.

Viewed from another aspect the invention provides a multilayer machine direction oriented film comprising at least an (A) layer and (B) layer, said (A) layer being an outer layer and comprising a multimodal linear low density polyethylene (LLDPE) and a plastomer having a density of 900 kg/m³ or less;
said (B) layer comprising a multimodal linear low density polyethylene (LLDPE);
wherein said film is a stretched film which is uniaxially oriented in the machine direction (MD) in a draw ratio of at least 1:3.

Viewed from another aspect the invention provides the use of a monolayer or multilayer film as hereinbefore defined in packaging, in particular in a form fill and seal packaging process.

Viewed from another aspect the invention provides a process for the formation of a monolayer or multilayer film as hereinbefore defined comprising obtaining a blend of a multimodal linear low density polyethylene (LLDPE) and a plastomer having a density of 900 kg/m³ or less;
forming said blend into a monolayer film or a multilayer film having layers (A) and (B),
said (A) layer being an outer layer and comprising a multimodal linear low density polyethylene (LLDPE) and a plastomer having a density of 900 kg/m³ or less;
said (B) layer comprising a multimodal linear low density polyethylene (LLDPE);
and uniaxially stretching said film in the machine direction (MD) in a draw ratio of at least 1:3.

Viewed from another aspect the invention provides an article packaged using a film as hereinbefore defined.

### Definitions

The term LLDPE means linear low density polyethylene herein.

The term outer layer means that in use the (A) layer is the sealing layer and is the layer contacted by the sealing bars in order to effect sealing of the film to a substrate (typically itself).

The films of the invention are uniaxially oriented in the machine direction. They are not therefore biaxially oriented films.

### Detailed Description of Invention

The MDO film of the invention must comprise at least a multimodal LLDPE. It will be appreciated that in such an LLDPE ethylene forms the major monomer unit present such as at least 80 wt% of the monomer residues present, such as at least 90 wt% or more.

It will be preferred if the multimodal LLDPE forms the most abundant polymer present within the MDO film as a whole, i.e. it has the largest weight percentage. Ideally, at least 50 wt% of the MDO film is formed from a multimodal LLDPE, preferably at least 60 wt%, such as at least 70 wt%.

The LLDPE of use in this invention is multimodal. The term "multimodal" means multimodal with respect to molecular weight distribution and includes also therefore bimodal polymers.

Usually, a LLDPE composition, comprising at least two polyethylene fractions, which have been produced under different polymerisation conditions resulting in different (weight average) molecular weights and molecular weight distributions for the fractions, is referred to as "multimodal". The prefix "multi" relates to the number of different polymer fractions present in the polymer. Thus, for example, the term multimodal polymer includes so called "bimodal" polymers consisting of two fractions. The form of the molecular weight distribution curve, i.e. the appearance of the graph of the polymer weight fraction as a function of its molecular weight, of a multimodal polymer, e.g. LLDPE, will show two or more maxima or at least be distinctly broadened in comparison with the curves for the individual fractions.

Ideally, the molecular weight distribution curve for multimodal polymers of the invention will show two distinction maxima.

For example, if a polymer is produced in a sequential multistage process, utilising reactors coupled in series and using different conditions in each reactor, the polymer fractions produced in the different reactors will each have their own molecular weight distribution and weight average molecular weight. When the molecular weight distribution curve of such a polymer is recorded, the individual curves from these fractions are superimposed into the molecular weight distribution curve for the total resulting polymer product, usually yielding a curve with two or more distinct maxima.

In any multimodal LLDPE, there is by definition a lower molecular weight component (LMW) and a higher molecular weight component (HMW). The LMW component has a lower molecular weight than the higher molecular weight component. This difference is preferably at least 5000 g/mol. Preferably, in a multimodal LLDPE of use in this invention at least one of the LMW and HMW components is a copolymer of ethylene. Further preferably, at least the HMW component is an ethylene copolymer. Further preferably, also the lower molecular weight (LMW) component may be an ethylene copolymer. Alternatively, if one of the components is a homopolymer, then LMW is the preferably the homopolymer.

Alternatively the multimodal LLDPE may comprise other polymer components, e.g. up to 10 % by weight of a well known polyethylene prepolymer (obtainable from a prepolymerisation step as well known in the art). In case of such prepolymer, the prepolymer component is comprised in one of LMW and HMW components, preferably LMW component, as defined above.

The term "ethylene copolymer" is used in this context to encompass polymers comprising repeat units deriving from ethylene and at least one other C₄₋₁₂ alpha olefin monomer. Preferred copolymers are binary and comprise a single comonomer or are terpolymers and comprise two or three comonomers. In any copolymeric HMW component, preferably at least 0.25 mol-%, preferably at least 0.5 mol-%, e.g. at least 1-mol%, such as up to 10 mol-%, of repeat units derive from the comonomer. Ethylene preferably forms the majority of the HMW component.

The preferred multimodal LLDPE composition is defined further below.

Accordingly, the multimodal LLDPE composition may have a density of 905-940 kg/m³. The density is preferably 915 to 940 kg/m³. Ideally, the multimodal LLDPE preferably has a density of 915 to 935 kg/m³.

The melt flow rate, MFR₂ of the multimodal LLDPE is preferably in the range 0.01 to 20 g/10min, e.g. 0.05 to 10 g/10min, preferably 0.1 to 6.0 g/10min. The MFR₂ is highly preferably in the range of 0.10 to 5 g/10min.

The MFR₂₁ of the multimodal LLDPE may be in the range 5 to 500, preferably 10 to 200 g/10min.

The Mw of the multimodal LLDPE, may be in the range 100,000 to 300,000, preferably 150,000 to 270,000. The Mw/Mn of the multimodal LLDPE may be in the range 10 to 30, preferably 10 to 25.

The multimodal LLDPE, may be formed from ethylene along with at least one C₄₋₁₂ alpha-olefin comonomer, e.g. 1-butene, 1-hexene or 1-octene. Preferably, the multimodal LLDPE, is a binary copolymer, i.e. the polymer contains ethylene and one comonomer, or a terpolymer, i.e. the polymer contains ethylene and two or three comonomers. Preferably, the multimodal LLDPE, comprises an ethylene hexene copolymer, ethylene octene copolymer or ethylene butene copolymer. The amount of comonomer present in the multimodal LLDPE, is preferably 0.5 to 12 mol%, e.g. 2 to 10% mole relative to ethylene, especially 4 to 8% mole.

As stated above a multimodal LLDPE comprises at least a LMW component and a HMW component.

The LMW component of LLDPE preferably has a MFR₂ of at least 50, preferably 50 to 3000 g/10 min, more preferably at least 100 g/10 min. The molecular weight of the low molecular weight component should preferably range from 20,000 to 50,000, e.g. 25,000 to 40,000.

The density of the lower molecular weight component may range from 930 to 980 kg/m³, e.g. 940 to 970 kg/m³, more preferably 945 to 955 kg/m³ in the case of copolymer and 940 to 975 kg/m³, especially 960 to 972 kg/m³ in the case of homopolymer.

The lower molecular weight component preferably forms from 30 to 70 wt%, e.g. 40 to 60% by weight of the multimodal LLDPE with the higher molecular weight component forming 70 to 30 wt%, e.g. 40 to 60% by weight.

The higher molecular weight component has a lower MFR₂ and a lower density than the lower molecular weight component.

The higher molecular weight component has preferably an MFR₂ of less than 1 g/10 min, preferably less than 0.5 g/10 min, especially less than 0.2 g/10min, and a density of less than 915 kg/m³, e.g. less than 910 kg/m³, preferably less than 905 kg/m³. The Mw of the higher molecular weight component may range from 100,000 to 1,000,000, preferably 250,000 to 500,000.

The multimodal LLDPE is preferably one formed using single site catalysis or a Ziegler Natta catalyst. Both these types of catalyst are well known in the art. The use of Ziegler Natta catalysts is preferred.

Multimodal LLDPE's of the invention are commercially available from suppliers such as Borealis under the trade names BorLite OPE792 and 795.

### Plastomer

The plastomer of the invention is a propylene copolymer with ethylene, butene, hexene or octene or is an ethylene copolymer with hexene or octene. It may also be a terpolymer of propylene with two or more of ethylene, butene, hexene or octene or a terpolymer of ethylene with hexene and octene. In all circumstances the plastomer has a density of 900 kg/m³ or less, preferably 890 kg/m³ or less, such as 880 kg/m³ or less. Plastomers generally have a density of 865 kg/m³ or higher such as 870 kg/m³ or higher. Plastomers with density in the range of 870 to 880 kg/m³ are preferred.

The plastomer is preferably a copolymer of ethylene and octene or a copolymer of propylene and ethylene in which the ethylene or propylene forms the major component. Preferably, propylene forms the major component. The content of ethylene is preferably 5 to 30 wt%, such as 7.5 to 20 wt% in the propylene ethylene copolymer. The content of octene in an ethylene octene plastomer is preferably 5 to 30 wt%, such as 7.5 to 20 wt% in the copolymer.

The plastomer is preferred one which contains random distribution of ethylene with the otherwise isotactic propylene chains. In can therefore be considered a random propylene ethylene copolymer. It is not however a heterophasic copolymer.

The melt flow rate, MFR₂ of the plastomer is preferably in the range 0.01 to 20 g/10min, e.g. 0.05 to 10 g/10min, preferably 0.1 to 6.0 g/10min.

Plastomers of the invention are ideally formed using metallocene type catalysts.

Plastomers of use in the invention are commercially available and can be bought from polymer suppliers.

In order to achieve a reduction in the seal initiation window, there should be 5 to 35 wt% of the plastomer present relative to the amount of multimodal LLDPE present in the layer in question, preferably 7.5 to 30 wt%, more preferably 10 to 25 wt%. Thus in the (A) layer of a multimodal film as described herein, there is preferably 5 to 35 wt% of the plastomer present relative to the amount of multimodal LLDPE.

### Preparation of polymer

The multimodal LLDPE can be any conventional, e.g. commercially available, polymer composition. Alternatively, suitable polymer compositions can be produced in a known manner according to or analogously to conventional polymerisation processes described in the literature of polymer chemistry.

Unimodal LLDPE, is preferably prepared using a single stage polymerisation, e.g. slurry or gas phase polymerisation, preferably a slurry polymerisation in slurry tank or, more preferably, in loop reactor in a manner well known in the art. As an example, a unimodal LLDPE can be produced e.g. in a single stage loop polymerisation process according to the principles given below for the polymerisation of low molecular weight fraction in a loop reactor of a multistage process, naturally with the exception that the process conditions (e.g. hydrogen and comonomer feed) are adjusted to provide the properties of the final unimodal polymer.

Multimodal (e.g. bimodal) polymers can be made by mechanical blending two or more, separately prepared polymer components or, preferably, by in-situ blending in a multistage polymerisation process during the preparation process of the polymer components. Both mechanical and in-situ blending are well known in the field.

Accordingly, preferred multimodal LLDPEs, are prepared by in-situ blending in a multistage, i.e. two or more stage, polymerization or by the use of two or more different polymerization catalysts, including multi- or dual site catalysts, in a one stage polymerization.

Preferably the multimodal LLDPE, is produced in at least two-stage polymerization using the same catalyst, e.g. a single site or Ziegler-Natta catalyst. Thus, for example two slurry reactors or two gas phase reactors, or any combinations thereof, in any order can be employed. Preferably however, the multimodal polymer, e.g. LLDPE, is made using a slurry polymerization in a loop reactor followed by a gas phase polymerization in a gas phase reactor.

A loop reactor - gas phase reactor system is marketed by Borealis as a BORSTAR reactor system. Any multimodal polymer, e.g. LLDPE, present is thus preferably formed in a two stage process comprising a first slurry loop polymerisation followed by gas phase polymerisation.

The conditions used in such a process are well known. For slurry reactors, the reaction temperature will generally be in the range 60 to 110°C (e.g. 85-110°C), the reactor pressure will generally be in the range 5 to 80 bar (e.g. 50-65 bar), and the residence time will generally be in the range 0.3 to 5 hours (e.g. 0.5 to 2 hours). The diluent used will generally be an aliphatic hydrocarbon having a boiling point in the range -70 to +100°C. In such reactors, polymerization may if desired be effected under supercritical conditions. Slurry polymerisation may also be carried out in bulk where the reaction medium is formed from the monomer being polymerised.

For gas phase reactors, the reaction temperature used will generally be in the range 60 to 115°C (e.g. 70 to 110°C), the reactor pressure will generally be in the range 10 to 25 bar, and the residence time will generally be 1 to 8 hours. The gas used will commonly be a non-reactive gas such as nitrogen or low boiling point hydrocarbons such as propane together with monomer (e.g. ethylene).

Preferably, the lower molecular weight polymer fraction is produced in a continuously operating loop reactor where ethylene is polymerised in the presence of a polymerization catalyst as stated above and a chain transfer agent such as hydrogen. The diluent is typically an inert aliphatic hydrocarbon, preferably isobutane or propane.

The higher molecular weight component can then be formed in a gas phase reactor using the same catalyst.

Where the higher molecular weight component is made second in a multistage polymerisation it is not possible to measure its properties directly. However, the skilled man is able to determine the density, MFR₂ etc of the higher molecular weight component using Kim McAuley's equations. Thus, both density and MFR₂ can be found using K. K. McAuley and J. F. McGregor: On-line Inference of Polymer Properties in an Industrial Polyethylene Reactor, AIChE Journal, June 1991, Vol. 37, No, 6, pages 825-835.

The density is calculated from McAuley's equation 37, where final density and density after the first reactor is known.

MFR₂ is calculated from McAuley's equation 25, where final MFR₂ and MFR₂ after the first reactor is calculated. The use of these equations to calculate polymer properties in multimodal polymers is common place.

The multimodal LLDPE may be made using any conventional catalyst, such as a chromium, single site catalyst, including metallocenes and non-metallocenes as well known in the field, or Ziegler-Natta catalysts as is also known in the art. The preferred choice is a Ziegler Natta (znLLDPE).

Preferred Ziegler-Natta catalysts comprise a transition metal component and an activator. The transition metal component comprises a metal of Group 4 or 5 of the Periodic System (IUPAC) as an active metal. In addition, it may contain other metals or elements, like elements of Groups 2, 13 and 17. Preferably, the transition metal component is a solid. More preferably, it has been supported on a support material, such as inorganic oxide carrier or magnesium halide. Examples of such catalysts are given, among others in WO 95/35323, WO 01/55230, WO 2004/000933, EP 810235 and WO 99/51646.

Conventional cocatalysts, supports/carriers, electron donors etc can be used.

The polymers of use on the invention are however commercially available materials.

### Films

The films of the invention can be multilayer films or monolayer films. In any multilayer film, it will be appreciated that the blend of multimodal LLDPE and plastomer must be in a sealing layer (i.e. an outer layer).

In its simplest embodiment, the present invention covers a film which is a monolayer MDO film comprising, e.g. consisting essentially of, a multimodal LLDPE and plastomer as herein described. The multimodal LLDPE is preferably the major component. Ideally, the multimodal LLDPE forms at 65 to 95 wt% of the blend with the plastomer, more preferably 70 to 92.5 wt%, such as 75 to 90 wt%.

The monolayer film or a layer containing the blend of the invention in a multilayer film may comprise 5 to 35 wt% of the plastomer, preferably 7.5 to 30 wt%, more preferably 10 to 25 wt% of the plastomer. The film/layer may contain 65 to 95 wt% of the multimodal LLDPE, more preferably 70 to 92.5 wt%, such as 75 to 90 wt% of the multimodal LLDPE.

Any film or film layer might also contain a mixture of multimodal LLDPE's of the invention.

The term consist essentially of, in connection with the blend of the invention, is used to indicate that the only polyolefins present are multimodal LLDPE and plastomer. The film may however contain standard polymer additives, possibly added via a masterbatch. The levels of these additives are low, typically below 3 wt%.

The monolayer film can be formed by extrusion of the necessary polymers to form the film. Multilayer films are formed by coextrusion.

The invention preferably relates to a multilayer film comprising at least layer (A) and a layer (B).

Layer (A) comprises at least the blend as hereinbefore defined.

Layer (B) preferably comprises a multimodal LLDPE as hereinbefore defined. Ideally layer (B) consists essentially of that multimodal LLDPE. Alternatively, it can be blended with a polypropylene polymer.

It is therefore preferred if films of the invention are multilayered. Multilayer films are preferably formed from at least three layers, such as 3 layers, 5 layers or 6 layers. Films preferably comprise therefore at least layers (A), (B) and (C).

It is preferred if two or more of the layers in the films of the invention comprise a multimodal LLDPE as hereinbefore defined. It is especially preferred if at least layer (A) and layer (B) of the film comprise a multimodal LLDPE. In a still preferred embodiment, layers (A) and (C) are identical. Preferred films of the invention are therefore ABA type films.

The term "consisting essentially of" used in relation to film layer materials is meant to exclude only the presence of other polyolefin components, preferably other polymers. Thus said term does not exclude the presence of additives, e.g. conventional film additives, i.e. each layer independently may contain conventional film additives such as antioxidants, UV stabilisers, acid scavengers, nucleating agents, anti-blocking agents, slip agents etc as well as polymer processing agent (PPA) and so on.

Films of the invention preferably comprise layers (A) and (B) below, especially layers (A), (B) and (C) below.

### Layer (A)

Accordingly, in a first preferable embodiment (i) of the invention, said layer (A) comprises a mixture of a multimodal LLDPE and a plastomer. It will be appreciated that the (A) layer may comprise a mixture of plastomers or a mixture of multimodal LLDPE components. Ideally however, there is only one plastomer and one multimodal LLDPE present in the (A) layer.

### Layer (B)

Layer (B) preferably comprises at least 50 wt%, preferably at least 60 wt%, more preferably at least 70 wt% of a multimodal LLDPE. In some embodiments even about 80 wt% or more of multimodal LLDPE is preferred. Multimodal LLDPE is preferably a multimodal znLLDPE. Preferably said layer (B) consists of a multimodal LLDPE polymer(s). It may therefore comprise a blend of two multimodal LLDPE's or a single multimodal LLDPE.

Alternatively, the (B) layer may contain a polypropylene component. This component can be a homopolymer or a copolymer of propylene with ethylene. The presence of a polypropylene component within the (B) layer is believed to enhance the sealing window of the film.

The use of a heterophasic polypropylene copolymer is preferred in the (B) layer. It is believed that the presence of a polypropylene component in the (B) layer contributes to seal stability and prevents burn throw in the film. Other components which can be added to the (B) layer to aid seal stability include HDPE having a density of at least 940°C. The use however of polypropylenes is preferred especially those having high mellting points such as at least 162°C.

The (B) layer may comprise 5 to 35 wt% of the polypropylene, preferably 7.5 to 30 wt%, more preferably 10 to 25 wt% of the polypropylene, if present.

### Layer (C)

Said layer (C) may have a polymer composition as described in relation to layer (A) above. Preferably layers (A) and (C) are identical in a ABA type film structure.

The film thickness distribution (%) of a ABC layer film is preferably 20 to 40%/20-60%/20-40% of the total film thickness (100%).

In a further preferred embodiment, the films of the invention comprise at least five/six layers, preferably in the following order:
(i) a first outer layer (A),
(ii) a second outer layer (B),
(iii) a first inner layer (C),
(iv) a second inner layer (C),
(v) a third outer layer (B) and
(vi) a fourth outer layer (A)

This film is preferably formed from two identical ABC type films and it can be argued that the centre C layers merge to become one (and hence a 5 layer construction). For an ABCCBA film structure the thickness of the layers may conform to 7.5-27.5%/15-35%/5-25%/15-35%/7.5-27.5%, wherein the total film thickness is 100% and the amount of core layer is the sum of two layers (C).

Ideally, the ABCCBA film is formed from two identical ABC films laminated together via their (C) layers.

### Other polymer components

It is preferred if the (A) layer of any multilayer film of the invention consists essentially of the blend of multimodal LLDPE and plastomer. It is envisaged however that small amounts, e.g. less than 20 wt% of other polymers might be present. These may be an LDPE (low density polyethylene) or a unimodal LLDPE especially one made using metallocene type catalysis.

Unimodal LLDPE's are LLDPEs which have a single peak in the GPC curve and which are therefore produced in a single polymerisation step. Unimodal LLDPEs are preferably metallocene produced, i.e. they are synthesised using metallocene catalysis. This gives characteristic features to the polymer such as narrow Mw/Mn, even comonomer distribution (observable under TREF) and so on. These polymers will be called unimodal mLLDPE's herein.

As used herein, the unimodal LLDPE polymer is an ethylene copolymer having a density of 940 kg/m³ or less. Preferred unimodal LLDPE's may have a density of 905-940 kg/m³, more preferably 910 to 937 kg/m³, e.g. 935 kg/m³ or below. In one preferable embodiment even densities of 925 kg/m³ or below are highly feasible.

The unimodal LLDPE is formed from ethylene along with at least one C4-12 alpha-olefin comonomer, e.g. 1-butene, 1-hexene or 1-octene. Preferably, the unimodal LLDPE is a binary copolymer, i.e. the polymer contains ethylene and one comonomer, or a terpolymer, i.e. the polymer contains ethylene and two or three, preferably two, comonomers. Preferably, the unimodal LLDPE comprises an ethylene hexene copolymer, ethylene octene copolymer, ethylene butene copolymer or a terpolymer of ethylene with 1-butene and 1-hexene comonomers. The amount of comonomer present in the unimodal LLDPE is preferably 0.5 to 12 mol%, e.g. 2 to 10% mole, especially 4 to 8% mole.

The MFR₂ of unimodal LLDPE's is preferably in the 0.01 or more, preferably 0.1 to 20 g/10min, e.g. 0.2 to 10, preferably 0.5 to 6.0, e.g. 0.7 to 4.0 g/10min.

The unimodal LLDPE has preferably a weight average molecular weight (Mw) of 100,000-250,000, e.g. 110,000-160,000.

The unimodal LLDPE polymers preferably posses a narrow molecular weight distribution. The Mw/Mn value is preferably 2 to 8, e.g. 2.2 to 4.

Unimodal LLDPEs are well know commercial products.

It is preferred if the films of the invention are free of any high density polyethylene, i.e. a polyethylene homopolymer or copolymer with a C3-12 alpha olefin having a density of more than 940 kg/m³.

It is also preferred if the films of the invention are free of any ethylene (meth)acrylate polymers.

It is also preferred if the films of the invention are free of an LDPE.

### Film preparation

Films are produced by extrusion through an annular die with a pressure difference applied to blow the extruded cylinder into a film and achieve the desired orientation within the film, i.e. to build a stress into the cooled film. Heat treatment results in stress relaxation and, as a result, shrinkage. Most of the shrinkage occurs while the film is at its hottest (generally ca. 120-130°C) during the heat treatment; however the film continues to shrink as it cools.

For film formation using polymer mixtures the different polymer components (e.g. within layers (A), (B) and optional (C)) are typically intimately mixed prior to extrusion and blowing of the film as is well known in the art. It is especially preferred to thoroughly blend the components, for example using a twin screw extruder, preferably a counter-rotating extruder prior to extrusion and film blowing.

The films of the invention are uniaxially oriented. That means that are stretched in a single direction, the machine direction.

The preparation of a uniaxially oriented multilayer film of the invention comprises at least the steps of forming a layered film structure and stretching the obtained multilayer film in a draw ratio of at least 1:3.

Typically the compositions providing the layers of the film will be blown i.e. (co)extruded at a temperature in the range 160°C to 240°C, and cooled by blowing gas (generally air) at a temperature of 10 to 50°C to provide a frost line height of 1 or 2 to 8 times the diameter of the die. The blow up ratio should generally be in the range 1.2 to 6, preferably 1.5 to 4.

The obtained film is subjected to a subsequent stretching step, wherein the film is stretched in the machine direction. Stretching may be carried out by any conventional technique using any conventional stretching devices which are well known to those skilled in the art.

Preferably for ABA type film structures, said film can advantageously be prepared first by coextruding compositions forming the layers (A), (B) and (A) through an annular die, blowing by blown extrusion into a tubular film to form a bubble. The formed bubble is then collapsed e.g. in nip rolls to form said film where layers (A) are contacted inside/inside, i.e. ABA/ABA. Alternatively, the coextruded bubble may be collapsed and split into two films. The two films can then be stretched separately in a winding machine (2 x ABA films).

It will be appreciated that in some embodiments, the coextruder used might be a 5 or 7 layer coextrusion machine. In that set up the central dies might all extrude (B) layer material to form an ABBBA type film or ABBBBBA type film. As all the central layers are identical this is effectively still an ABA film.

Stretching is preferably carried out at a temperature in the range 70-90 °C, e.g. about 80 °C. Any conventional stretching rate may be used, e.g. 2 to 40 %/second.

The film is stretched only in the machine direction to be uniaxial. The effect of stretching in only one direction is to uniaxially orient the film.

The film is stretched at least 3 times, preferably 3 to 10 times, its original length in the machine direction. This is stated herein as a draw ratio of at least 1:3, i.e. "1" represents the original length of the film and "3" denotes that it has been stretched to 3 times that original length. Preferred films of the invention are stretched in a draw ratio of at least 1:4, more preferably between 1:5 and 1:8, e.g. between 1:5 and 1:7. An effect of stretching (or drawing) is that the thickness of the film is similarly reduced. Thus a draw ratio of at least 1:3 preferably also means that the thickness of the film is at least three times less than the original thickness.

Blow extrusion and stretching techniques are well known in the art, e.g. in EP-A-299750.

The film preparation process steps of the invention are known and may be carried out in one film line in a manner known in the art. Such film lines are commercially available.

The films of the invention typically have a starting (or original) thickness of 400 µm or less, preferably 40 to 300 µm, more preferably 50 to 250 µm prior to the stretching step.

After stretching, the final thickness of the uniaxially oriented films, of the invention is typically 50 µm or less, preferably 10 to 50 µm, more preferably 15 to 40 µm, still more preferably 20 to 38 µm, e.g. 25 to 35 microns.

### Film Properties

The films of the invention preferably have high stiffness measured as tensile modulus of at least 600 MPa in the machine direction and/or transverse direction. It is generally observed however, that the presence of the plastomer component reduces stiffness slightly relative to a film without this low density component.

The films of the invention may have a dart drop of at least 400 g, preferably at least 450 g. Ideally this is measured on a 25 micron film. It has been surprisingly found that the dart drop impact strength of the films of the invention is as high as that achieved where the plastomer is exchanged for a conventional LLDPE.

The films of the invention may have a tear resistance of at least 3.0 N in the MD and/or TD, such as at least 4.0 N. Ideally this is measured on a 25 micron film. It has been surprisingly found that tear resistance is as high as that achieved where the plastomer is exchanged for a conventional LLDPE.

Importantly, the seal initiation temperature is preferably reduced to below 105°C, ideally below 100°C. It will be appreciated that seal initiation temperature is to an extent dependent on film thickness. Thicker films tend to have higher seal initiation temperatures. At the same time however, they can withstand longer periods in contact with the sealing bars and therefore a longer seal time.

It is preferred if films of the invention have a seal initiation temperature less than 105°C, i.e. if a film is so thick that is does not meet this standard it can be considered outside this embodiment. Alternatively viewed films of the invention preferably have a seal initiation temperature of less than 105°C at a film thickness of 25 microns with an ABA structure with film thickness distribution of 20/60/20.

The upper limit for successful sealing is preferably at least 120°C. That means the sealing window is ideally at least 20°C, such as at least 25°C. As above, these values are preferably part of the film or alternatively viewed films of the invention preferably have a seal end temperature (SET) of at least 120°C at a film thickness of 25 microns with an ABA structure with film thickness distribution of 20/60/20.

### Applications

The films of the invention are preferably used in packaging of household, food, healthcare or beverage products. In particular, the films are of use in form fill and seal applications, especially for fresh produce.

The invention will now be described with reference to the following nonlimiting examples and figure.

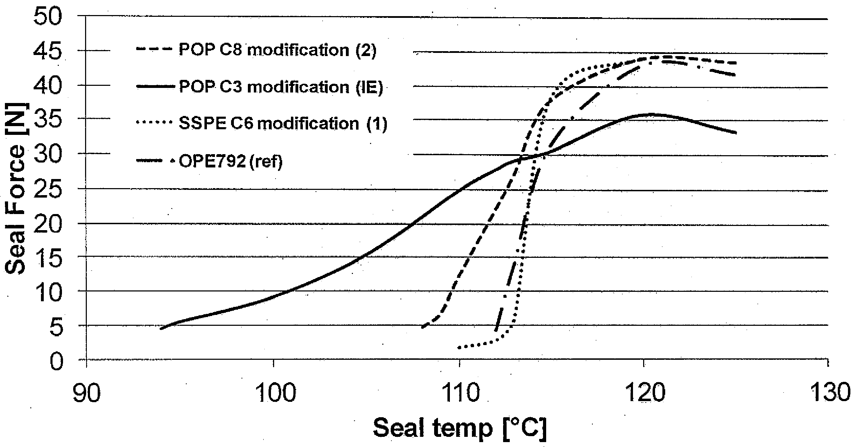

Figure 1 shows the seal force vs seal temperature for examples C1, C2 and the inventive example of the invention.

### Determination methods

**Density** of the materials is measured according to ISO 1183:1987 (E), method D, with isopropanol-water as gradient liquid. The cooling rate of the plaques when crystallising the samples was 15 °C/min. Conditioning time was 16 hours.

### Melt Flow Rate (MFR) or Melt Index (MI)

The melt flow rate (MFR) is determined according to ISO 1133 and is indicated in g/10 min. The MFR is an indication of the melt viscosity of the polymer. The MFR is determined at 190°C for PE and at 230 °C for PP. The load under which the melt flow rate is determined is usually indicated as a subscript, for instance MFR₂ is measured under 2.16 kg load, MFR₅ is measured under 5 kg load or MFR₂₁ is measured under 21.6 kg load.

### Molecular weights, molecular weight distribution, Mn, Mw, MWD

The weight average molecular weight Mw and the molecular weight distribution (MWD = Mw/Mn wherein Mn is the number average molecular weight and Mw is the weight average molecular weight) is measured by a method based on ISO 16014-4:2003. A Waters 150CV plus instrument, equipped with refractive index detector and online viscosimeter was used with 3 x HT6E styragel columns from Waters (styrene-divinylbenzene) and 1,2,4-trichlorobenzene (TCB, stabilized with 250 mg/L 2,6-Di tert butyl-4-methyl-phenol) as solvent at 140 °C and at a constant flow rate of 1 mL/min. 500 µL of sample solution were injected per analysis. The column set was calibrated using universal calibration (according to ISO 16014-2:2003) with 10 narrow MWD polystyrene (PS) standards in the range of 1.05 kg/mol to 11 600 kg/mol. Mark Houwink constants were used for polystyrene and polyethylene (K: 19 x10⁻³ dL/g and a: 0.655 for PS, and K: 39 x10⁻³ dL/g and a: 0.725 for PE). All samples were prepared by dissolving 0.5 - 3.5 mg of polymer in 4 mL (at 140 °C) of stabilized TCB (same as mobile phase) and keeping for 2 hours at 140 °C and for another 2 hours at 160 °C with occasional shaking prior sampling in into the GPC instrument.

**Comonomer Content (%wt and %mol)** was determined by using ¹³C-NMR. The ¹³C-NMR spectra were recorded on Bruker 400 MHz spectrometer at 130 °C from samples dissolved in 1,2,4-trichlorobenzene/benzene-d₆ (90/10 w/w). Conversion between %wt and %mol can be carried out by calculation.

**Impact Strength** is determined on Dart-drop (g/50%). Dart-drop is measured using ISO 7765-1, method "A". A dart with a 38 mm diameter hemispherical head is dropped from a height of 0.66 m onto a film sample clamped over a hole. If the specimen fails, the weight of the dart is reduced and if it does not fail the weight is increased. At least 20 specimens are tested. The weight resulting in failure of 50% of the specimens is calculated and this provides the dart drop impact (DDI) value (g). The relative DDI (g/µm) is then calculated by dividing the DDI by the thickness of the film.

**Tear resistance (determined as Elmendorf tear (N):** Applies for the measurement both in machine direction and in transverse direction. The tear strength is measured using the ISO 6383/2 method. The force required to propagate tearing across a film sample is measured using a pendulum device. The pendulum swings under gravity through an arc, tearing the specimen from pre-cut slit. The specimen is fixed on one side by the pendulum and on the other side by a stationary clamp. The tear resistance is the force required to tear the specimen. The relative tear resistance (N/mm) is then calculated by dividing the tear resistance by the thickness of the film.

**Tensile modulus (secant modulus, 0.05-1.05%)** is measured according to ASTM D 882-A on film samples prepared as described under below "Film Sample preparation". The speed of testing is 5mm/min. The test temperature is 23°C. Width of the film was 25 mm.

### Sealing method (SIT, SET seal force):

The seal initiation and seal force of the films was measured based on the following protocol. Films used were 25 µm thickness, 25 mm width, 300 mm long. Films were sealed to themselves using a seal pressure of 0.66 N/mm² which was exerted for 1 s over a temperature of 92 to 140°C. The delay time was 30 s.

To test seal force, a peel speed of 42 mm/s was employed. Each test was repeated three times and an average taken.

The lower limit (heat sealing initiation temperature (SIT)) is the sealing temperature at which a sealing strength of > 5N is achieved.

The upper limit (sealing end temperature (SET)) is reached, when the films stick to the sealing device or burn-through occurs.

### Example 1

The following polymers were used in the examples:

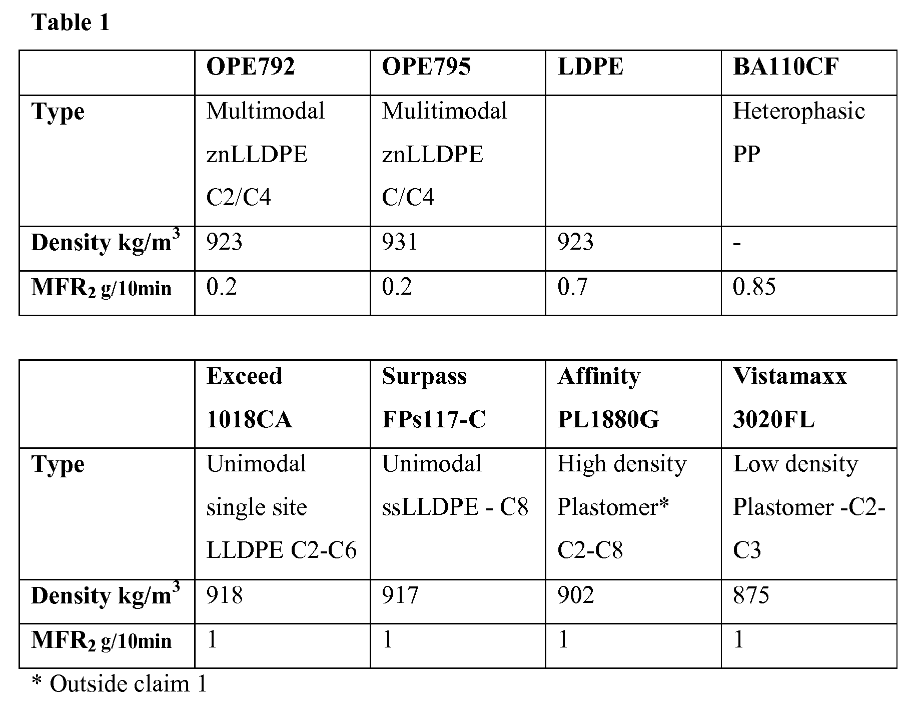

### Film Preparation

Films having an ABA-structure were coextruded on a 7-layer Alpine coextrusion line with die diameter 300 mm, at a blow up ratio (BUR) of 1:2,5, frost line height 3D and Die gap 1.4 mm. The temperature settings on all extruders were A=210°C / B=210°C / C=210°C and the temperature setting on the extruder die was 210°C. The formed films (ABBBBBA=ABA) have thicknesses as shown in Table 3 and the composition of each of the films is also presented in Table 2.

Stretching was carried out using a monodirectional stretching machine manufactured by Hosokawa Alpine AG in Augsburg/Germany. The film obtained from blown film extrusion was pulled into the orientation machine then stretched between two sets of nip rollers where the second pair runs at higher speed than the first pair resulting in the desired draw ratio. Stretching is carried out with the draw ratios presented in Table 3. After exiting the stretching machine the film is fed into a conventional film winder where the film is slit to its desired width and wound to form reels.

The film samples ABA used for the determinations of general film properties as defined in the description were prepared as described above and had starting film thickness of 150 µm before stretching, draw ratio of 1:6, final film thickness of 25 µm after stretching and a thickness distribution (%) of 20/60/20 of the total film thickness.

**Table 2**

| | C1 | C2 | C3* | IE | C5 | C6 |
|---|---|---|---|---|---|---|
| Layer A | 80% OPE792 + 20% Exceed 1018CA | 80% OPE792 + 20% Surpass FPs117-C | 80% OPE792 + 20% Affinity PL1880G | 80% OPE792 + 20% Vistamaxx 3020FL | 90% OPE792 + 10% Affinity PL1880G | 90% Exceed 1018CA + 10% LDPE |
| B | 100% OPE 795 | 100% OPE 795 | 100% OPE 795 | 100% OPE 795 | 100% OPE 795 | 100% OPE 795 |
| S.I.T. [°C] | 113 | 111 | 109 | 95 | 111 | 107 |
| S.E.T.[°C] | 120 | 130 | 125 | 125 | 130 | 120 |
| Tens. Mod MD [MPa] | 728 | 672 | 660 | 629 | 664 | 656 |
| Tens. Mod TD [MPa] | 869 | 847 | 781 | 684 | 786 | 897 |
| Tear MD [N] | 3,02 | 2,35 | 2,92 | 4,33 | 2,4 | 1,16 |
| Tear TD [N] | 4,75 | 4,64 | 3,05 | 4,82 | 3,77 | 7,19 |
| DDI F50 [gr.] | 535 | 501 | 510 | 496 | 508 | 274 |

| | | | | | | |
|---|---|---|---|---|---|---|
| * It was also noted that at levels to 30 wt% Affinity PL1880G to 70% OPE792 in the (A) layer and at levels of 70% Affinity PL1880G and 30% OPE792 the S.I.T was still not lowered. | | | | | | |

## Claims

1. A multilayer machine direction oriented film comprising at least an (A) layer and (B) layer, said (A) layer being an outer layer and comprising a multimodal linear low density polyethylene (LLDPE) and a plastomer having a density of 900 kg/m³ or less;
said (B) layer comprising a multimodal linear low density polyethylene (LLDPE);
wherein said film is a stretched film which is uniaxially oriented in the machine direction (MD) in a draw ratio of at least 1:3; or
a monolayer machine direction oriented film comprising a blend of a multimodal linear low density polyethylene (LLDPE) and a plastomer having a density of 900 kg/m³ or less, said film being a stretched film which is uniaxially oriented in the machine direction (MD) in a draw ratio of at least 1:3.

2. A film as claimed in claim 1 wherein the plastomer is a propylene ethylene copolymer or an ethylene octene copolymer.

3. A film as claimed in any preceding claim wherein the density of the plastomer is 870 to 880 kg/m³.

4. A film as claimed in any preceding claim wherein the (A) layer or monolayer film consists essentially of the plastomer and multimodal LLDPE.

5. A film as claimed in any preceding claim wherein the multilayer film is an ABA film.

6. A film as claimed in any preceding claim wherein the (B) layer consists essentially of multimodal LLDPE or is a blend of multimodal LLDPE and a polypropylene component.

7. A film as claimed in any preceding claim wherein the plastomer forms 5 to 35 wt% of the (A) layer or monolayer film, preferably 10 to 30 wt%.

8. A film as claimed in any preceding claim wherein the seal initiation temperature of the film is less than 105°C.

9. A film as claimed in any preceding claim wherein the sealing end temperature is at least 120°C.

10. A film as claimed in any preceding claim wherein the film of the invention has a dart drop index of at least 400 g when measured according to ISO 7765-1.

11. A film as claimed in any preceding claim wherein the film is 50 microns or less in thickness.

12. Use of a monolayer or multilayer film as claimed in claim 1 to 11 in packaging, in particular in a form fill and seal packaging process.

13. A process for the formation of a monolayer or multilayer film as claimed in claim 1 to 11 comprising obtaining a blend of a multimodal linear low density polyethylene (LLDPE) and a plastomer having a density of 900 kg/m³ or less;
forming said blend into a monolayer film or a multilayer film having layers (A) and (B),
said (A) layer being an outer layer and comprising a multimodal linear low density polyethylene (LLDPE) and a plastomer having a density of 900 kg/m³ or less;
said (B) layer comprising a multimodal linear low density polyethylene (LLDPE);
and uniaxially stretching said film in the machine direction (MD) in a draw ratio of at least 1:3.

14. An article packaged using a film as claimed in claim 1 to 11.

## Patentansprüche

1. Mehrschichtige, in Maschinenrichtung orientierte Folie, die mindestens eine (A)-Schicht und eine (B)-Schicht umfasst, wobei die (A)-Schicht eine äußere Schicht ist und ein multimodales lineares Polyethylen mit niedriger Dichte (LLDPE) und einen Thermoplast, der eine Dichte von 900 kg/m³ oder weniger aufweist, umfasst;
wobei die (B)-Schicht ein multimodales lineares Polyethylen mit niedriger Dichte (LLDPE) umfasst;
wobei die Folie eine verstreckte Folie ist, die uniaxial in der Maschinenrichtung (MD) mit einem Zugverhältnis von mindestens 1:3 orientiert ist; oder
oder eine einschichtige, in Maschinenrichtung orientierte Folie, die eine Mischung aus einem multimodalen linearen Polyethylen mit niedriger Dichte (LLDPE) und einem Thermoplast, der eine Dichte von 900 kg/m³ oder weniger aufweist, umfasst, wobei die Folie eine verstreckte Folie ist, die uniaxial in der Maschinenrichtung (MD) mit einem Zugverhältnis von mindestens 1:3 orientiert ist.

2. Folie nach Anspruch 1, wobei der Thermoplast ein Propylen-Ethylen-Copolymer oder ein Ethylen-Octen-Copolymer ist.

3. Folie nach einem der vorhergehenden Ansprüche, wobei die Dichte des Thermoplasts 870 bis 880 kg/m³ beträgt.

4. Folie nach einem der vorhergehenden Ansprüche, wobei die (A)-Schicht oder einschichtige Folie im Wesentlichen aus dem Thermoplast und multimodalem LLDPE besteht.

5. Folie nach einem der vorhergehenden Ansprüche, wobei die mehrschichtige Folie eine ABA-Folie ist.

6. Folie nach einem der vorhergehenden Ansprüche, wobei die (B)-Schicht im Wesentlichen aus multimodalem LLDPE besteht oder eine Mischung aus multimodalem LLDPE und einer Polypropylenkomponente ist.

7. Folie nach einem der vorhergehenden Ansprüche, wobei der Thermoplast 5 bis 35 Gew.-%, vorzugsweise 10 bis 30 Gew.-% der (A)-Schicht oder der einschichtigen Folie bildet.

8. Folie nach einem der vorhergehenden Ansprüche, wobei die Siegelanfangstemperatur der Folie weniger als 105 °C beträgt.

9. Folie nach einem der vorhergehenden Ansprüche, wobei die Siegelendtemperatur der Folie mindestens 120 °C beträgt.

10. Folie nach einem der vorhergehenden Ansprüche, wobei die Folie der Erfindung einen Dart-Drop-Index von mindestens 400 g aufweist, gemessen gemäß ISO 7765-1.

11. Folie nach einem der vorhergehenden Ansprüche, wobei die Folie eine Dicke von 50 Mikrometer oder weniger hat.

12. Verwendung einer einschichtigen oder mehrschichtigen Folie nach Anspruch 1 bis 11 zum Verpacken, insbesondere in einem Schlauchbeutelverpackungsverfahren [Engl.: form fill and seal packaging process].

13. Verfahren zur Bildung einer einschichtigen oder mehrschichtigen Folie nach Anspruch 1 bis 11, umfassend das Erhalten von einer Mischung aus einem multimodalen linearen Polyethylen mit niedriger Dichte (LLDPE) und einem Thermoplast, der eine Dichte von 900 kg/m³ oder weniger aufweist;
Formen der Mischung zu einer einschichtigen Folie oder einer mehrschichtigen Folie, die die Schichten (A) und (B) aufweist,
wobei die (A)-Schicht eine äußere Schicht ist und ein multimodales lineares Polyethylen mit niedriger Dichte (LLDPE) und einen Thermoplast, der eine Dichte von 900 kg/m³ oder weniger aufweist, umfasst;
wobei die (B)-Schicht ein multimodales lineares Polyethylen mit niedriger Dichte (LLDPE) umfasst;
und uniaxiales Verstrecken der Folie in Maschinenrichtung (MD) mit einem Zugverhältnis von mindestens 1:3.

14. Artikel, der unter Verwendung einer Folie nach Anspruch 1 bis 11 verpackt ist.

## Revendications

1. Film à plusieurs couches orienté dans le sens machine comprenant au moins une couche (A) et une couche (B), ladite couche (A) étant une couche extérieure et comprenant un polyéthylène linéaire basse densité (LLDPE) multimodal et un plastomère ayant une densité de 900 kg/m³ ou moins ;
ladite couche (B) comprenant un polyéthylène linéaire basse densité (LLDPE) multimodal ;
dans lequel ledit film est un film étiré qui est orienté de façon uniaxiale dans le sens machine (MD) dans un rapport d'étirage d'au moins 1:3 ; ou
un film monocouche orienté dans le sens machine comprenant un mélange d'un polyéthylène linéaire basse densité (LLDPE) multimodal et d'un plastomère ayant une densité de 900 kg/m³ ou moins, ledit film étant un film étiré qui est orienté de façon uniaxiale dans le sens machine (MD) dans un rapport d'étirage d'au moins 1:3.

2. Film selon la revendication 1, dans lequel le plastomère est un copolymère de propylène - éthylène ou un copolymère d'éthylène - octène.

3. Film selon l'une quelconque des revendications précédentes, dans lequel la densité du plastomère est de 870 à 880 kg/m³.

4. Film selon l'une quelconque des revendications précédentes, dans lequel la couche (A) ou le film monocouche consiste sensiblement en plastomère et LLDPE multimodal.

5. Film selon l'une quelconque des revendications précédentes dans lequel le film à plusieurs couches est un film ABA.

6. Film selon l'une quelconque des revendications précédentes dans lequel la couche (B) consiste principalement en LLDPE multimodal ou est un mélange de LLDPE multimodal et d'une composante polypropylène.

7. Film selon l'une quelconque des revendications précédentes, dans lequel le plastomère forme 5 à 35 % en poids de la couche (A) ou du film monocouche, de préférence 10 à 30 % en poids.

8. Film selon l'une quelconque des revendications précédentes, dans lequel la température de début de scellement du film est inférieure à 105 °C.

9. Film selon l'une quelconque des revendications précédentes dans lequel la température de fin de scellement est d'au moins 120 °C.

10. Film selon l'une quelconque des revendications précédentes, dans lequel le film de l'invention a un indice de résistance au choc au mouton d'au moins 400 g lorsque mesuré selon ISO 7765-1.

11. Film selon l'une quelconque des revendications précédentes dans lequel le film fait 50 microns ou moins d'épaisseur.

12. Utilisation d'une monocouche ou d'un film à plusieurs couches selon les revendications 1 à 11 dans un emballage, en particulier dans un processus d'emballage par formage - remplissage - scellement.

13. Processus pour la formation d'un film monocouche ou à plusieurs couches selon les revendications 1 à 11 comprenant l'obtention d'un mélange d'un polyéthylène linéaire basse densité (LLDPE) multimodal et d'un plastomère ayant une densité de 900 kg/m³ ou moins ;
le formage dudit mélange en un film monocouche ou un film à plusieurs couches ayant des couches (A) et (B),
ladite couche (A) étant une couche extérieure et comprenant un polyéthylène linéaire basse densité (LLDPE) multimodal et un plastomère ayant une densité de 900 kg/m³ ou moins ;
ladite couche (B) comprenant un polyéthylène linéaire basse densité (LLDPE) multimodal ;
et l'étirage de façon uniaxiale dudit film dans le sens machine (MD) dans un rapport d'étirage d'au moins 1:3.

14. Article emballé en utilisant un film selon les revendications 1 à 11.
